Europäisches Patentamt

European Patent Office

Office européen des brevets

(11) Veröffentlichungsnummer: **0 253 917**
**B1**

(12) **EUROPÄISCHE PATENTSCHRIFT**

(45) Veröffentlichungstag der Patentschrift:
21.03.90

(51) Int. Cl.⁴: **F15B 1/06**
**// F16K17/196**

(21) Anmeldenummer: 86110168.1

(22) Anmeldetag: 24.07.86

(54) Vorrichtung zur Erhöhung des Flüssigkeitsdruckes vor der Saugseite einer Pumpe.

(43) Veröffentlichungstag der Anmeldung:
27.01.88 Patentblatt 88/4

(45) Bekanntmachung des Hinweises auf die Patenterteilung:
21.03.90 Patentblatt 90/12

(84) Benannte Vertragsstaaten:
DE FR GB IT

(56) Entgegenhaltungen:
DE-A- 2 504 344
US-A- 2 251 664
US-A- 2 853 014

HYDRAULICS & PNEUMATICS, Band 31, Nr. 4,
April 1978, Seiten 62-67, Cleveland, US; R.T.
SCHNEIDER: "What you should know about hydraulic
reservoirs"

(73) Patentinhaber: DEERE & COMPANY, 1 John Deere Road,
Moline Illinois 61265(US)

(72) Erfinder: Roth, Wolfgang, Zweibrücker Strasse 9,
D-6660 Zweibrücken 15(DE)

(74) Vertreter: Sartorius, Peter et al, DEERE & COMPANY
European Office, Patent Department
Postfach 503 Steubenstrasse 36-42,
D-6800 Mannheim 1(DE)

## Beschreibung

Die Erfindung bezieht sich auf eine Vorrichtung zur Erhöhung des Flüssigkeitsdruckes vor der Saugseite einer Pumpe, die über eine Saugleitung an einen mit Flüssigkeit befüllbaren Behälter und über eine Druckleitung an mindestens einen Verbraucher angeschlossen ist, wobei in dem Behälter die Einlaßöffnung eines Diffusors vorgesehen ist und eine an den Verbraucher angeschlossene Rückführleitung mit ihrer Auslaßöffnung kurz vor der Einlaßöffnung des Diffusors endet.

Bekanntlich verursacht das Zusammentreffen von hoher Strömungsgeschwindigkeit des aus der Pumpe auf der Druckseite austretenden Öles mit einer Beschränkung in der Zufuhr normalerweise als Folge einer verstopften oder falsch bemessenen Saugleitung bzw. eines darin vorgesehenen Filters, daß der Druck des der Pumpe zufließenden Öles und dadurch die Ölzufuhr unter die von der Pumpe benötigte Menge absinkt. Dadurch aber bilden sich im zuströmenden Öl Luftblasen, was für die Pumpe infolge der dann auftretenden Kavitation besonders schädlich ist. Bei der bekannten Vorrichtung (DE-A 2 504 344), von der die Erfindung ausgeht, soll nun das Problem der Blasenbildung dadurch vermieden werden, daß eine Strahlsaugeinrichtung durch das Ende der Rückführleitung und eine am Saugrohr vorgesehene Einschnürung geschaffen wird.

Hierdurch läßt sich bereits der Druck an der Saugseite der Pumpe etwas erhöhen, jedoch sieht diese bekannte Vorrichtung zusätzlich einen Luftabscheider in der Rücklaufleitung vor, um Luft, die in die durch die Rückführleitung strömende Flüssigkeit eingemischt ist, positiv zu entfernen. Hinzu kommt, daß bei dieser bekannten Vorrichtung der Behälter, aus dem die Pumpe Flüssigkeit ansaugt, mit der Atmosphäre ständig verbunden bzw. nicht vollständig gefüllt ist, so daß beim Pumpenbetrieb immer die Gefahr besteht, daß Luft mitangesaugt wird.

Die mit der Erfindung zu lösende Aufgabe wird darin gesehen, in dem Behälter, aus dem die Pumpe Flüssigkeit ansaugt, einen erhöhten Druck von annähernd konstantem Niveau aufrechtzuerhalten.

Diese Aufgabe ist dadurch gelöst worden, daß dem Behälter ein kleinerer, geschlossener und nicht mit der Atmosphäre verbundener Behälter zugeordnet ist, in den die Saugleitung und der Diffusor mit seiner Auslaßöffnung münden, wobei beide Behälter über ein selbsttätiges Überdruckventil miteinander in Verbindung stehen. Auf diese Weise ist zur Druckerhöhung des Flüssigkeitsdruckes an der Saugseite der Pumpe eine bei arbeitender Pumpe ständig mit Flüssigkeit gefüllte Druckkammer geschaffen, weil der Diffusor mit dem Ende der Rückführleitung als Strahlpumpe arbeitet, die aus dem Innenraum des größeren Behälters zusätzlich zu dem von der Pumpe geförderten Flüssigkeitsstrom einen weiteren Flüssigkeitsstrom in die Druckkammer fördert, der infolge des Überdruckventils wieder in den Innenraum des größeren Behälters abströmen kann. Dabei wird der Druck in der Druckkammer bzw. in dem kleineren Behälter auf einen durch das Überdruckventil vorgegebenen Wert angehoben und damit auch in der oder den Saugleitungen. Das Überdruckventil ist dabei so ausgebildet, daß die Druckkammer auch entlüftet werden kann, weil die aus der Druckkammer in den Innenraum des größeren Behälters abströmende Flüssigkeit die dort eventuell vorhandene Luft mitnimmt. Im ganzen gesehen ist damit eine sehr gute Entlüftung der Flüssigkeit bei erhöhtem Druck an der Saugseite der Pumpe gewährleistet.

Damit beim Anlauf der Pumpe der Innenraum des größeren Behälters kurzzeitig mit dem kleineren Behälter zusätzlich verbunden werden kann, ist nach einem weiteren Merkmal der Erfindung das Überdruckventil mit einem Nachsaugeventil kombiniert. Damit ist beim Befüllen der Anlage gewährleistet, daß die Pumpe mit minimalem Unterdruck Flüssigkeit aus dem Innenraum des größeren Behälters ansaugen kann, und zwar ohne Druckdifferenz.

Um eine besonders raumsparende Ausbildung der Anlage zu erhalten, kann der kleinere Behälter in dem größeren Behälter aufgenommen und das kombinierte Überdruck- und Nachsaugeventil in einer Oberwand des kleineren Behälters angeordnet sein.

Zur einfachen Ausbildung des Überdruckventils wird nach der Erfindung ferner vorgeschlagen, daß in der Oberwand des kleineren Behälters mindestens eine über eine Abdeckplatte verschließbare Öffnung vorgesehen ist, wobei die Abdeckplatte gegen die Wirkung einer Feder im größeren Behälter höhenverstellbar ausgebildet ist. Somit muß die Flüssigkeit in dem kleineren Behälter die Abdeckplatte gegen die Wirkung der Feder anheben, um von dem kleineren Behälter in den Innenraum des größeren Behälters zu gelangen.

Hinsichtlich der einfachen Kombination des Überdruckventils mit dem Nachsaugeventil ist erfindungsgemäß vorgesehen, daß in der Abdeckplatte eine oder mehrere Durchlaßöffnungen und unterhalb der Abdeckplatte ein flexibel ausgebildetes Dichtungselement vorgesehen sind, über das die Durchlaßöffnungen verschließbar sind. Auf diese Weise wird, solange noch keine Flüssigkeit sich in dem kleineren Behälter befindet oder dieser noch nicht vollständig mit Flüssigkeit gefüllt ist, das Dichtungselement, das zweckmäßig ein gegenüber der Flüssigkeit geringeres Volumengewicht aufweist, nach unten hängen und die Durchlaßöffnungen in der Abdeckplatte offen halten, so daß Flüssigkeit aus dem Innenraum des größeren Behälters in den kleineren Behälter fließen kann. Sobald aber der kleinere Behälter mit Flüssigkeit gefüllt ist, schwimmt das Dichtungselement gegen die Abdeckplatte und verschließt dadurch die Durchlaßöffnungen. Erst wenn die Flüssigkeit den Druck der Feder überwinden kann, wird die Abdeckplatte und gegebenenfalls auch das Dichtungselement angehoben, und unter Druck stehende Flüssigkeit kann in den größeren Behälter strömen.

Zur zweckmäßigen Ausgestaltung des kombinierten und selbsttätig wirkenden Überdruck- und Nachsaugeventils können die Abdeckplatte und das Dichtungselement auf einem an der Oberwand des kleineren Behälters angeordneten Bolzen axial verschiebbar sein, wobei die Feder zwischen einem am oberen Ende des Bolzens vorgesehenen Anschlag bzw. Sicherungsring und der Oberseite der Abdeckplatte und das Dichtungselement zwischen der Unterseite der Abdeckplatte und der Oberwand des kleineren Behälters angeordnet sind und wobei der unterhalb der Abdeckplatte liegende Bereich der Oberwand des kleineren Behälters eine ringförmige Einbuchtung aufweist, in der mehrere verschließbare Öffnungen vorgesehen sind und die allmählich in einen sich erhöhenden Kegelteil übergeht, der zu der auf der Oberwand aufliegenden Abdeckplatte einen Abstand aufweist, der der Stärke des Dichtungselements entspricht.

Im folgenden wird die Erfindung anhand von einen Ausführungsweg darstellenden Zeichnungen näher erläutert. Es zeigt:

Fig. 1 eine schematische Darstellung einer Pumpenanlage,

Fig. 2 ein Überdruck- und Nachsaugeventil der Pumpenanlage,

Fig. 3 eine perspektivische Darstellung des Überdruck- und Nachsaugeventils gemäß Fig. 2.

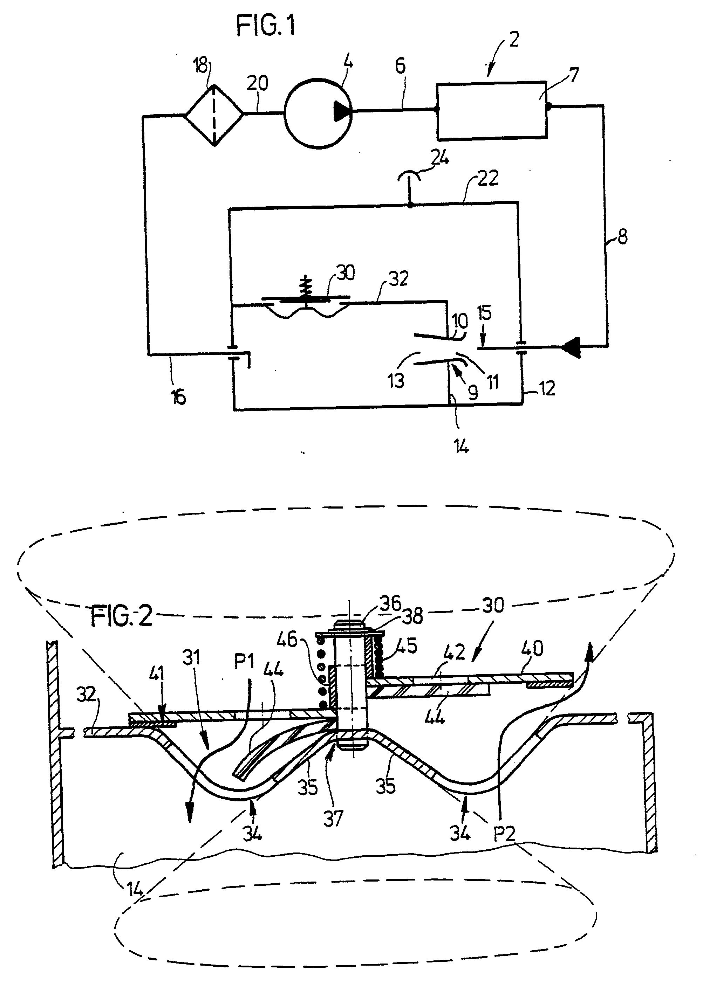

In Fig. 1 der Zeichnung ist mit 2 eine Pumpenanlage zur Erhöhung des Flüssigkeitsdruckes bezeichnet, zu der eine Pumpe 4 gehört, die über eine Druckleitung 6 mit einem Verbraucher 7 verbunden ist, der über eine Rückführleitung 8 an einen größeren Behälter 12, in dem ein kleinerer Behälter 14 vorgesehen ist, mittels eines Diffusors 10 angeschlossen ist. Wie aus Fig. 1 hervorgeht, endet die Auslaßöffnung 15 der Rückführleitung 8 kurz vor der kleineren Einlaßöffnung 11 des Diffusors 10. Die größere Auslaßöffnung 13 des Diffusors 10 erstreckt sich bis in den kleineren Behälter 14. An den kleineren Behälter 14 ist ferner eine Saugleitung 16 angeschlossen, die über einen Filter 18 und eine weitere Saugleitung 20 mit der Saugseite der Pumpe 4 verbunden ist. Der größere Behälter 12 weist an seiner Oberseite 22 einen Einfüll- und Entlüftungsfilter 24 auf.

Der kleinere Behälter 14 ist in dem größeren Behälter 12 derart angeordnet, daß Teile der Seitenwände des größeren Behälters Seitenwände des kleineren Behälters sein können. Beide Behälter 12 und 14 sind mit Druckmittel gefüllt, wobei der kleinere Behälter 14 bis zum oberen Rand mit Druckmittel gefüllt sein kann.

Arbeitet die Pumpenanlage 2 ohne den in Fig. 1 dargestellten Diffusor 10, so kann aufgrund des der Pumpe 4 vorgeschalteten Filters 18 an der Saugleitung 16 ein Unterdruck und somit Kavitation auftreten, die dann zu einer Beschädigung der Leitung bzw. der Pumpe führen kann.

Um in der Saugleitung bzw. in der Pumpe 4 eine Kavitation zu vermeiden, ist es vorteilhaft, den durch den Filter 18 und die Reibungsverluste entstandenen Druckabfall wieder so weit an der Saugseite der Pumpe zu erhöhen, daß der Druckmittelstrom nicht abreißt bzw. keine Kavitation in der Saugleitung auftritt.

Die Erhöhung des Druckes an der Saugseite der Pumpe 4 wird durch den Einbau des Diffusors 10 in eine im kleineren Behälter 14 vorgesehene Einlaßöffnung 9 erreicht, wobei die Einlaßöffnung 11 des Diffusors 10 kleiner ist als seine Auslaßöffnung 13, die sich in den kleineren Behälter 14 erstreckt, während die kleinere Einlaßöffnung 11 bis in den größeren Behälter 12 reicht. Auf diese Weise besteht zwischen dem größeren und dem kleineren Behälter eine Durchflußverbindung, und da die Auslaßöffnung 15 der Rückführleitung 8 kurz vor der Einlaßöffnung 11 des Diffusors 10 endet, bilden der Diffusor 10 und das Ende bzw. die Auslaßöffnung 15 der Rückführleitung 8 eine Strahlpumpe. Fließt das Druckmittel von dem Verbraucher 7 über die Rückführleitung 8 zum Diffusor 10, so nimmt der aus der Auslaßöffnung 15 austretende Druckmittelstrahl einen Teil des Druckmittels aus dem größeren Behälter 12 in den kleineren Behälter 14 mit und erhöht bei gleichzeitiger Verlangsamung der Austrittsgeschwindigkeit des Druckmittels den Druck in dem kleineren Behälter 14. Durch den Druckanstieg im kleineren Behälter 14 wird auch der Druck in der Saugleitung 16 und somit der Druck in dem Filter 18 und somit auch der Druck vor der Saugöffnung der Pumpe 4 erhöht, da nunmehr das Druckmittel über den Druckanstieg in der Saugleitung 16 besser durch den Filter 18 gedrückt wird. Ohne diesen Druckanstieg im kleineren Behälter 14 würde in der Saugleitung 16 bzw. 20, insbesondere hinter dem Filter 18, ein relativ großer Unterdruck auftreten, der dann zur Kavitation und somit zur Zerstörung der Leitung und auch der Pumpe führen könnte.

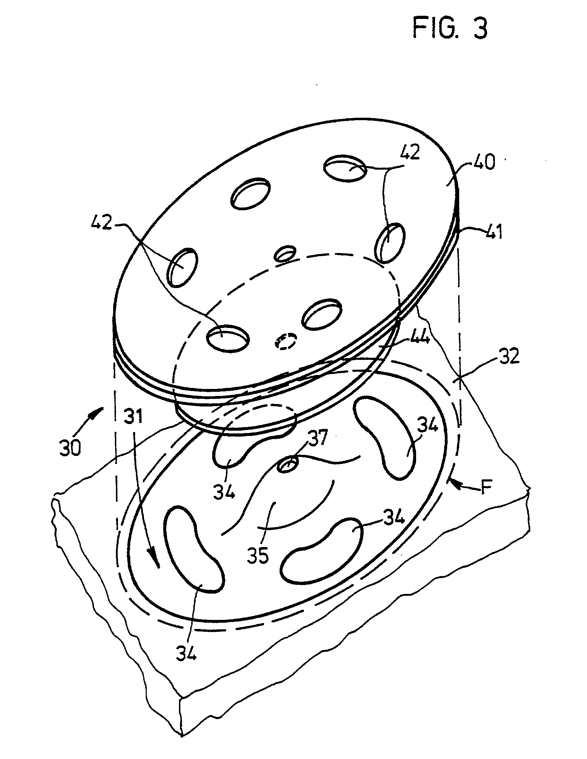

Da mit einfachen baulichen Mitteln eine Druckerhöhung in der Saugleitung 16 bzw. 20 möglich ist, kann der bisherige Filter 18 relativ klein dimensioniert werden, da der Druck in der Saugleitung 16 ausreicht, das Druckmittel durch den Filter 18 zu drücken, auch dann, wenn dieser teilweise zugesetzt ist. Die verringerte Filterfläche des Filters 18 wird also durch den höheren Druck des Druckmittels kompensiert. Sollte der Druck in dem kleineren Behälter 14 übermäßig ansteigen, so kann das Druckmittel gemäß Pfeil P2 über ein selbsttätig steuerbares Überdruck- und Nachsaugeventil 30 in den größeren Behälter 12 entweichen. Das in Fig. 2 dargestellte Überdruck- und Nachsaugeventil 30 ist in einer Oberwand 32 des kleineren Behälters 14 angeordnet. Die Oberwand 32 weist Öffnungen 34 auf, die gemäß Fig. 3 in einer ringförmigen Einbuchtung 31 vorgesehen sind. Die Einbuchtung 31 geht in einen Kegelteil 35 über, der mit geringem Abstand unter der Oberwand 32 des kleineren Behälters 14 endet. Der Abstand entspricht der Stärke eines Dichtungselementes 44. Am oberen Ende des Kegelteils 35 ist eine Bohrung 37 zur Aufnahme eines vertikal verlaufenden Bolzens 36 vorgesehen, der an seinem oberen freien Ende einen Sicherungsring 38 trägt. Auf dem Bolzen 36 lagert eine Abdeckplatte 40, die die Öffnungen 34 sowie den Kegelteil 35 und die Einbuchtung 31 von oben her vollständig verschließt. Die Abdeckplatte 40 ist ebenfalls mit mindestens einer bzw. mehreren Durchlaßöffnungen 42 versehen, die bei Auflage der Abdeckplatte 40 auf der Oberwand 32 eine Verbindung zwischen dem größeren Behälter 12 und dem kleineren Behälter 14 herstellen können. Unterhalb der Abdeckplatte 40 befinden sich ein fest angeordneter Dichtring 41 und das elastisch ausgebildete Dichtungselement 44, das die Durchlaßöffnungen 42 der Abdeckplatte 40 von unten her verschließt, wenn der Druck im kleineren Behälter 14 ansteigt. In diesem Falle wird das flexible Dichtungselement 44 nach oben gegen die untere Seite der Abdeckplatte 40 gepreßt (nicht dargestellte Zwischenstellung des Überdruck- und Nachsaugeventils gemäß Fig. 2). Die Abdeckplatte 40 liegt bis zu einem bestimmten Druck, der kleiner als der Druck einer Feder 45 ist, mit ihrem Dichtring 41 auf der Oberwand 32 auf (Fig. 2, linke Stellung des Überdruck- und Nachsaugeventils, wobei das nach unten hängende Dichtungselement 44 noch nach oben bewegt werden muß, dies entspricht der Zwischenstellung des Überdruck- und Nachsaugeventils). Die Auflagefläche des Dichtringes 41 ist in Fig. 3 durch die gestrichelte Linie F (Auflagefläche) angedeutet. In der Zwischenstellung wird der Druckmittelabfluß vom kleineren Behälter 14 zum größeren Behälter 12 unterbunden. Erst wenn der im kleineren Behälter 14 herrschende Druck größer ist als der durch die Feder 45 hervorgerufene Druck, nehmen die Abdeckplatte 40 sowie das Dichtungselement 44 die in Fig. 2 dargestellte rechte Stellung ein. In dieser Stellung wird die zwischen dem auf dem Bolzen 36 angeordneten Sicherungsring 38 und der Oberwand der Abdeckplatte wirkende Feder 45 so weit zusammengedrückt, bis die Abdeckplatte 40 gegen eine auf den Bolzen aufgebrachte Distanzhülse 46 zur Anlage kommt (rechte Stellung des Überdruck- und Nachsaugeventils gemäß Fig. 2).

Das Überdruck- und Nachsaugeventil 30 hat den Vorteil, daß durch den Diffusor 10 ein gewisser Druck im kleineren Behälter 14 aufgebaut werden kann und somit ein kleines zusätzliches Druckmittelvolumen in den Druckmittelstrom der Pumpe 4 eingeführt werden kann, der ausreicht, um die Druckmittelverluste aus den Saugleitungen 16, 20 und dem Filter 18 auszugleichen. Hierdurch kann eine Kavitation an der Saugseite der Pumpe 4 vermieden werden.

Nachfolgend ist die Wirkungsweise der Pumpenanlage 2 beschrieben. Beim Anlauf der Pumpe 4 kann das Überdruck- und Nachsaugeventil 30 kurzfristig zum Innenraum des kleineren Behälters 14 geöffnet werden, wozu das flexible Dichtungselement 44 sich nach unten biegt und dabei gegen die Oberfläche des Kegelteils 35 zur Anlage kommen kann. Auf diese Weise wird beim Befüllen der Anlage gewährleistet, daß die Pumpe 4 mit minimalem Unterdruck Öl aus dem Innenraum des größeren Behälters 12 ansaugen kann. Aus diesem Grunde ist das Überdruck- und Nachsaugeventil 30 auf der Oberwand 32 angeordnet, wobei das flexible Dichtungselement 44 aus elastischem Material hergestellt ist, das ein spezifisches Gewicht aufweist, das kleiner ist als Öl, so daß es normalerweise nach unten hängt bzw. auf dem Kegelteil 35 aufliegt, so daß Druckmittel bzw. Öl aus dem größeren Behälter 12 zum Innenraum des kleineren Behälters 14 fließen kann. Ist jedoch der Innenraum des kleineren Behälters 14 mit Druckmittel bzw. Öl gefüllt, so schwimmt das Dichtungselement 44 gegen die Unterseite der Abdeckplatte 40 auf und verschließt somit die Durchlaßöffnungen 42. Der Druck des Druckmittels im Innenraum des kleineren Behälters 14 wirkt dabei auf die Feder 45, so daß die Feder 45 auch den maximalen Druckanstieg des Druckmittels im kleineren Behälter 14 bestimmt. Erst wenn dieser Druck übermäßig ansteigt, kann das Dichtungselement 44 gemeinsam mit der Abdeckplatte 40 gegen die Wirkung der Feder 45 nach oben verstellt werden und somit die Öffnungen 34 freigeben. Durch die vorteilhafte Ausbildung und Anordnung erhält man somit an der Saugseite der Pumpe 4 stets den zulässigen Druck, der ausreicht, um eine Kavitation im Leitungssystem bzw. in der Pumpe 4 zu vermeiden.

## Patentansprüche

1. Vorrichtung zur Erhöhung des Flüssigkeitsdruckes vor der Saugseite einer Pumpe (4), die über eine Saugleitung (16) an einen mit Flüssigkeit befüllbaren Behälter (12) und über eine Druckleitung (6) an mindestens einen Verbraucher (7) angeschlossen ist, wobei in dem Behälter (12) die Einlaßöffnung (11) eines Diffusors (10) vorgesehen ist und eine an den Verbraucher (7) angeschlossene Rückführleitung (8) mit ihrer Auslaßöffnung (15) kurz vor der Einlaßöffnung (11) des Diffusors (10) endet, dadurch gekennzeichnet, daß dem Behälter (12) ein kleinerer, geschlossener und nicht mit der Atmosphäre verbundener Behälter (14) zugeordnet ist, in den die Saugleitung (16) und der Diffusor (10) mit seiner Auslaßöffnung (13) münden, wobei beide Behälter (12 und 14) über ein selbsttätiges Überdruckventil miteinander in Verbindung stehen.

2. Vorrichtung nach Anspruch 1, dadurch gekennzeichnet, daß das Überdruckventil mit einem Nachsaugeventil kombiniert ist.

3. Vorrichtung nach den Ansprüchen 1 und 2, dadurch gekennzeichnet, daß der kleinere Behälter (14) in dem größeren Behälter (12) aufgenommen und das kombinierte Überdruck- und Nachsaugeventil (30) in einer Oberwand (32) des kleineren Behälters (14) angeordnet ist.

4. Vorrichtung nach einem oder mehreren der vorherigen Ansprüche, dadurch gekennzeichnet, daß in der Oberwand (32) des kleineren Behälters (14) mindestens eine über eine Abdeckplatte (40) verschließbare Öffnung (34) vorgesehen ist, wobei die Abdeckplatte (40) gegen die Wirkung einer Feder (45) im größeren Behälter (12) höhenverstellbar ausgebildet ist.

5. Vorrichtung nach Anspruch 4, dadurch gekennzeichnet, daß in der Abdeckplatte (40) eine oder mehrere Durchlaßöffnungen (42) und unterhalb der Abdeckplatte (40) ein flexibel ausgebildetes Dichtungselement (44) vorgesehen sind, über das die Durchlaßöffnungen (42) verschließbar sind.

6. Vorrichtung nach Anspruch 5, dadurch gekennzeichnet, daß die Abdeckplatte (40) und das Dichtungselement (44) auf einem an der Oberwand (32) des kleineren Behälters (14) angeordneten Bolzen (36) axial verschiebbar sind, wobei die Feder (45) zwischen einem am oberen Ende des Bolzens (36) vorgesehenen Anschlag bzw. Sicherungsring (38) und der Oberseite der Abdeckplatte (40) und das Dichtungselement (44) zwischen der Unterseite der Abdeckplatte (40) und der Oberwand (32) des kleineren Behälters (14) angeordnet sind.

7. Vorrichtung nach Anspruch 5 oder 6, dadurch gekennzeichnet, daß der unterhalb der Abdeckplatte (40) liegende Bereich der Oberwand (32) des kleineren Behälters (14) eine ringförmige Einbuchtung (31) aufweist, in der mehrere verschließbare Öffnungen (34) vorgesehen sind und die allmählich in einen sich erhöhenden Kegelteil (35) übergeht, der zu der auf der Oberwand (32) aufliegenden Abdeckplatte (40) einen Abstand aufweist, der der Stärke des Dichtungselements (44) entspricht.

**Revendications**

1. Installation pour augmenter la pression du liquide à l'admission d'une pompe (4) qui est reliée par une conduite d'aspiration (16) à un réservoir (12) pouvant être rempli de liquide et, par une conduite de refoulement (6), à au moins un appareil utilisateur (7), l'ouverture d'entrée (11) d'un diffuseur (10) étant prévue dans le réservoir (12) et une conduite de retour (8) reliée à l'appareil utilisateur (7) s'achevant, avec son ouverture de sortie (15), peu avant l'ouverture d'entrée (11) du diffuseur (10), caractérisée en ce qu'il est rattaché au réservoir (12) un réservoir (14) plus petit, fermé et ne communiquant pas avec l'atmosphère, dans lequel débouchent la conduite d'aspiration (16) et le diffuseur (10) avec son ouverture de sortie (13), les deux réservoirs (12 et 14) étant en communication mutuelle par l'intermédiaire d'une soupape de surpression automatique.

2. Installation selon la revendication 1, caractérisée en ce que la soupape de surpression est combinée avec une soupape d'aspiration.

3. Installation selon les revendications 1 et 2, caractérisée en ce que le réservoir (14) le plus petit est logé dans le réservoir (12) le plus grand, et en ce que la combinaison (30) de la soupape de surpression et de la soupape d'aspiration est placée dans une paroi supérieure (32) du réservoir (14) le plus petit.

4. Installation selon une ou plusieurs des revendication précédentes, caractérisée en ce qu'il est prévu dans la paroi supérieure (32) du réservoir (14) le plus petit au moins une ouverture (34) pouvant être fermée au moyen d'une plaque de recouvrement (40), la plaque de recouvrement (40) étant conformée de façon à pouvoir se déplacer en hauteur contre l'action d'un ressort (45) dans le réservoir (12) le plus grand.

5. Installation selon la revendication 4, caractérisée en ce qu'on prévoit dans la plaque de recouvrement (40) une ou plusieurs ouvertures de passage (42) et au-dessous de la plaque de recouvrement (40) un élément d'étanchéité (44) de conformation flexible au moyen duquel les ouvertures de passage (42) peuvent être fermées.

6. Installation selon la revendication 5, caractérisée en ce que la plaque de recouvrement (40) et l'élément d'étanchéité (44) peuvent se déplacer axialement sur une cheville (36) placée sur la paroi supérieure (32) du réservoir (14) le plus petit, le ressort (45) étant placé entre une butée ou un cir- clip (38) prévu à l'extrémité supérieure la cheville (36) et la face supérieure de la plaque de recouvrement (40) et l'élément d'étanchéité (44) entre la face inférieure de la plaque de recouvrement (40) et la paroi supérieure (32) du réservoir (14) le plus petit.

7. Installation selon la revendication 5 ou 6, caractérisée en ce que la zone de la paroi supérieure (32) du récipient (14) le plus petit se trouvant au-dessous de la plaque de recouvrement (40) comporte un creux annulaire (31) dans laquelle plusieurs ouvertures (34) pouvant être obturées sont prévues et qui se raccorde progressivement à une partie conique (35) montante qui présente une distance à la plaque de recouvrement (40) placée sur la paroi (32) égale à l'épaisseur de l'élément d'étanchéité (44).

**Claims**

1. Apparatus for increasing the fluid pressure on the suction side of a pump (4), which is connected through a suction line (16 )to a container (12) fillable with liquid and through a pressure line (6) to at least one user (7), wherein the inlet opening (11) of a diffusor (10) is provided in the container (12) and a return line (8) connected to the user (7) terminates with its outlet opening (15) shortly before the inlet opening (11) of the diffusor (10), characterized in that there is associated with the container (12) a smaller, closed container (14) not connected to the atmosphere, into which open the suction line (16) and the outlet opening (13) of the diffusor (10), both containers (12 and 14) being in communication through an automatic relief valve.

2. Apparatus according to claim 1, characterized in that the relief valve is combined with a suction valve.

3. Apparatus according to claims 1 and 2, characterized in that the smaller container (14) is received in the larger container (12) and the combined relief and suction valve (30) is arranged in an upper wall (32) of the smaller container(14).

4. Apparatus according to one or more of the preceding claims, characterized in that at least one opening (34) closable by a cover plate (40) is provided in the upperwall (32) of the smaller container (14), the cover plate (40) being formed adjustable in height in the larger container (12) against the action of a spring (45).

5. Apparatus according to claim 4, characterized in that one or more through openings (42) are provided in the cover plate (40) and a flexibly formed sealing element (44) is provided below the cover plate (40), by which the through openings (42) can be closed.

6. Apparatus according to claim 5, characterized in that the cover plate (40) and the sealing element (44) are arranged axially displaceable on a rod (36) arranged on the upper wall (32) of the smaller container (14), the spring (45) being arranged between a stop or snap ring (38) on the upper end of the rod (36) and the upper side of the cover plate (40) and the sealing element (44) being arranged between the underside of the cover plate (40) and the upper wall (32) of the smaller container (14).

7. Apparatus according to claim 5 or 6, characterized in that the region of the upper wall (32) of the smaller container (14) lying beneath the cover plate (40) has an annular indentation (31), in which a plurality of closable openings (34) are provided, and which gradually passes into a rising cone part (35), which has a spacing from the cover plate (40) lying on the upper wall (32) corresponding to the thickness of the sealing element (44).

# FIG.1

# FIG.2

FIG. 3